# EUROPEAN PATENT APPLICATION

(11) **EP 4 382 332 A1**
(43) Date of publication of application: **12.06.2024**
(21) Application number: 22900612.7
(22) Date of filing: 01.12.2022
(51) Int. Cl.: B60K 1/04, B60L 58/12, B60L 58/18

(54) **BATTERY SYSTEM, CHARGING CONTROL METHOD AND APPARATUS, AND ELECTRONIC DEVICE AND STORAGE MEDIUM**

(30) Priority: 01.12.2021 CN 202111450479
(71) Applicant: China Faw Co., Ltd., Changchun, Jilin 130011 (CN)
(72) Inventor: WANG, Deping, Changchun, Jilin 130011 (CN); PEI, Xiaojuan, Changchun, Jilin 130011 (CN); SUN, Huanli, Changchun, Jilin 130011 (CN); ZHOU, Qi, Changchun, Jilin 130011 (CN); CHEN, Yongsheng, Changchun, Jilin 130011 (CN); QIAO, Yantao, Changchun, Jilin 130011 (CN); ZHANG, Xingrui, Changchun, Jilin 130011 (CN)
(74) Representative: Penza, Giancarlo
(86) International application number: PCT/CN2022/135883
(87) International publication number: WO 2023/098808

(57) **Abstract**

Disclosed in the present application are a battery system, and a charging control method and apparatus, and an electronic device and a storage medium. The battery system includes a rechargeable battery pack, a switching apparatus, and at least one battery-replacement battery pack. The rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

## Description

### Cross-Reference to Related Application

This present invention claims priority to Chinese Patent Application No. 202111450479.5 filed to the China National Intellectual Property Administration on December 1, 2021, the disclosure of which is hereby incorporated by reference in its entirety.

### Technical Field

Embodiments of the present application relate to the technical field of electric vehicles, for example, to a battery system, and a charging control method and apparatus, and an electronic device and a storage medium.

### Background

With the development of a new energy vehicle technology, electric vehicles are gradually maturing and occupying an important market. However, for the electric vehicles, long charging time and poor endurance capabilities are still the main constraints to the current development of the electric vehicles. The above problems are generally solved by replacing an entire battery in the related art. That is to say, an entire battery pack is dismounted or the entire battery pack is replaced when an electric vehicle needs to be charged. The endurance of the electric vehicle relies on the model of a battery-replacement battery pack. The endurance can be guaranteed by selecting a high-capacity integral battery pack, but the requirements for exchange stations are high; multiple low-capacity integral battery packs are selected to reduce the difficulty of battery replacement while the endurance is guaranteed. However, dedicated voltage converters need to be configured among the plurality of low-capacity integral battery packs, so as to balance the voltages among the plurality of low-capacity integral battery packs. In addition, the layout space of the low-capacity integral battery packs is affected by the dedicated voltage converter, affecting the endurance capability of the electric vehicle.

### Summary

The present invention provides a battery system, and a charging control method and apparatus, and an electronic device and a storage medium, so as to achieve rational configuration of a battery pack, increase a driving range of a battery system, reduce the impact of changes in configuration of the battery pack on the voltage of the battery system, and improve the security of the battery system.

Based on a first aspect, an embodiment of the present application provides a battery system. The system includes:
a rechargeable battery pack, a switching apparatus, and at least one battery-replacement battery pack.

The rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

Based on a second aspect, an embodiment of this application provides a charging control method. The method includes the following operations.

A battery state of an energy storage apparatus is acquired. The battery state includes state of charge, internal resistance, and cell voltage.

A vehicle operating target is determined based on the battery state and an operating energy requirement threshold under a current vehicle operating mode.

The energy storage apparatus is controlled to charge based on the vehicle operating target.

The energy storage apparatus includes a rechargeable battery pack, a switching apparatus, and at least one battery-replacement battery pack; the rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

Based on a third aspect, an embodiment of this application further provides a charging control apparatus. The apparatus includes a state detection module, an operation determination module, and a charging control module.

The state detection module is configured to acquire a battery state of an energy storage apparatus. The battery state includes state of charge, internal resistance, and cell voltage.

The operation determination module is configured to determine a vehicle operating target based on the battery state and an operating energy requirement threshold under a current vehicle operating mode.

The charging control module is configured to control the energy storage apparatus to charge based on the vehicle operating target.

The energy storage apparatus includes a rechargeable battery pack, a switching apparatus, and at least one battery-replacement battery pack; the rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

Based on a fourth aspect, an embodiment of the present application further provides an electronic device. The electronic device includes:
one or more processors and a memory.
The memory is configured to store one or more programs.

When the one or more programs are executed by the one or more processors, the one or more processors are enabled to implement the charging control method described in any one of the embodiments of the present application.

Based on a fifth aspect, an embodiment of the present application further provides a computer-readable storage medium. The computer-readable storage medium stores a computer program. The charging control method described in any one of the embodiments of the present application is implemented when the computer program is executed by a processor.

### Brief Description of the Drawings

Fig. 1 is a schematic structural diagram of a battery system based on an embodiment of the present application.
Fig. 2 is a schematic structural diagram of an assembly apparatus based on an embodiment of the present application.
Fig. 3 is a schematic structural diagram of another battery system based on another embodiment of the present application.
Fig. 4 is a schematic diagram of data visualization display based on an embodiment of the present application.
Fig. 5 is a schematic structural diagram of a battery system based on another embodiment of the present application.
Fig. 6 is a flowchart of a charging control method based on an embodiment of the present application.
Fig. 7 is a schematic diagram of a charging control method based on another embodiment of the present application.
Fig. 8 is a schematic diagram of battery replacement of a battery-replacement battery pack based on an embodiment of the present application.
Fig. 9 is a schematic structural diagram of a charging control apparatus based on an embodiment of the present application.
Fig. 10 is a schematic structural diagram of an electronic device based on an embodiment of the present application.

### Detailed Description of the Embodiments

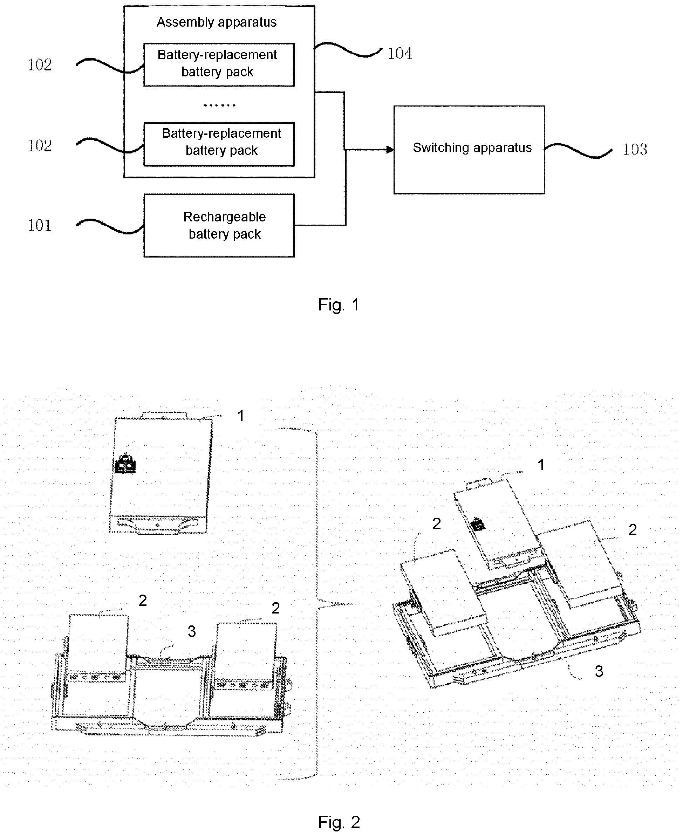

Fig. 1 is a schematic structural diagram of a battery system based on an embodiment of the present application. The embodiment of the present application is applicable to the situation that a vehicle battery system provides a stable voltage. Referring to Fig. 1, the system provided in this embodiment of the present application includes a rechargeable battery pack 101, a switching apparatus 103, and at least one battery-replacement battery pack 102. The rechargeable battery pack 101 and the battery-replacement battery pack 102 are connected with the switching apparatus 103; the switching apparatus 103 is configured to control the rechargeable battery pack 101 and the battery-replacement battery pack 102 to provide a stable voltage for a vehicle load; the rechargeable battery pack 101 is fixed on a vehicle; and the battery-replacement battery pack 102 is mounted on the vehicle through an assembly apparatus 104.

The rechargeable battery pack 101 can be an apparatus that is mounted in the vehicle and configured to perform charging and discharging. The rechargeable battery pack 101 can be standard configuration of the vehicle. The rechargeable battery pack 101 can have a large out-point force, and can be charged through a household charging pile or a dedicated charging pile. The rechargeable battery pack 101 can use an energy storage apparatus with low cost and high capacity. The battery-replacement battery pack 102 can be an apparatus that provides power to the vehicle. There can be one or more battery-replacement battery packs 102 in the vehicle, and the assembly number can be determined by user requirements or manufacturer cost. The number of the battery-replacement battery packs 102 in the vehicle can change during battery replacement; and the number of the battery-replacement battery packs 102 can be increased or reduced based on the user requirements. The battery replacement process can include manual battery replacement or exchange station battery replacement. The replacement process of the battery-replacement battery packs 102 can aim at replacing certain battery-replacement battery pack 102 or replacing all the battery-replacement battery packs 102. In this embodiment of the present application, the rechargeable battery pack 101 and the battery-replacement battery pack 102 can be independent of each other. Through different configuration modes of the battery-replacement battery pack 102 and the rechargeable battery pack 101, the production cost of the vehicle can be reduced, and charging consumption of batteries is reduced. The presence of the battery-replacement battery pack 102 can mitigate energy waste of a large-capacity battery during short distance driving, such that the impact of quick charging of the batteries on the security and service life of the batteries can be effectively reduced. Therefore, timely and efficient state detection can be performed on the batteries with different states, thereby achieving functions of the battery system of equalized charging, maintenance, and cascade utilization.

In this embodiment of the present application, the switching apparatus 103 can be a software-hardware device having a control function, and can be a Microcontroller Unit (MCU) of the vehicle. The MCU can store a computer program; and the computer program can be configured to adjust the power, which is outputted by the rechargeable battery pack 101 and the battery-replacement battery pack 102. The switching apparatus 103 can be connected with the rechargeable battery pack 101 and the battery-replacement battery pack 102 by using a universal bus; and the universal bus can be configured for information transmission. The switching apparatus 103 can collect battery parameter information of the rechargeable battery pack 101 and the battery-replacement battery pack 102 by means of the universal bus, and transmit the battery parameter information to a vehicle high-voltage framework; and then the vehicle high-voltage framework inputs or outputs a high voltage, such that the rechargeable battery pack 101 and the battery-replacement battery pack 102 can achieve voltage balance of the vehicle without using a dedicated voltage converter, thereby reducing the manufacturing expenses of the vehicle. Fig. 2 is a schematic structural diagram of an assembly apparatus based on an embodiment of the present application. Referring to Fig. 2, the assembly apparatus 3 can include one or more battery slots. Each battery slot can be provided with a rechargeable battery 1 and a battery-replacement battery 2; and the rechargeable battery 1 can be located in a central area of the assembly apparatus 3.

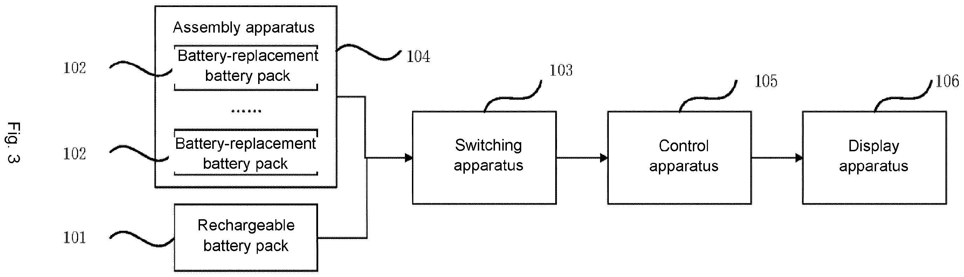

Fig. 3 is a schematic structural diagram of another battery system based on another embodiment of the present application. This embodiment of the present application is refined on the basis of the above embodiments of the present application. Referring to Fig. 3, the battery system provided in this embodiment of the present application can further include a control apparatus 105 and a display apparatus 106. The control apparatus 105 is connected with the rechargeable battery pack 101 and the battery-replacement battery pack 102, and is configured to monitor battery parameter information of the battery-replacement battery pack 102 and insulation information of the vehicle during battery replacement. The control apparatus 105 is further configured to execute a battery replacement fault handling operation based on the battery parameter information and the insulation information. The display apparatus 106 is connected with the control apparatus 105, and is configured to acquire communication interaction content of the control apparatus 105, and display the communication interaction content.

For example, the control apparatus 105 can be a vehicle controller. The control apparatus 105 can be connected with the rechargeable battery pack 101 and the battery-replacement battery pack 102 by means of a hard wire, and can collect the battery parameter information of the rechargeable battery pack 101 and the battery-replacement battery pack. The battery parameter information can include one or more of battery capacity, battery life, battery residual charge, and battery driving range. The control apparatus 105 can also be connected with multiple electric devices of the vehicle, and acquire insulation information of the electric devices. The insulation information can include current, voltage or resistance information of multiple electric elements. The control apparatus 105 can perform monitoring during the process of charging and/or battery replacement of the rechargeable battery pack 101 and the battery-replacement battery pack 102; whether the process of charging and battery replacement complies with electrical safety is detected by using the collected battery parameter information and the insulation information; and when it is determined that there is an operation that violates the electrical safety, the control apparatus 105 can also trigger the battery replacement fault handling operation, so as to improve the safety of battery charging and battery replacement. The battery replacement fault handling operation includes one or more of a charge termination operation, a battery replacement termination operation, and a fault information reporting operation.

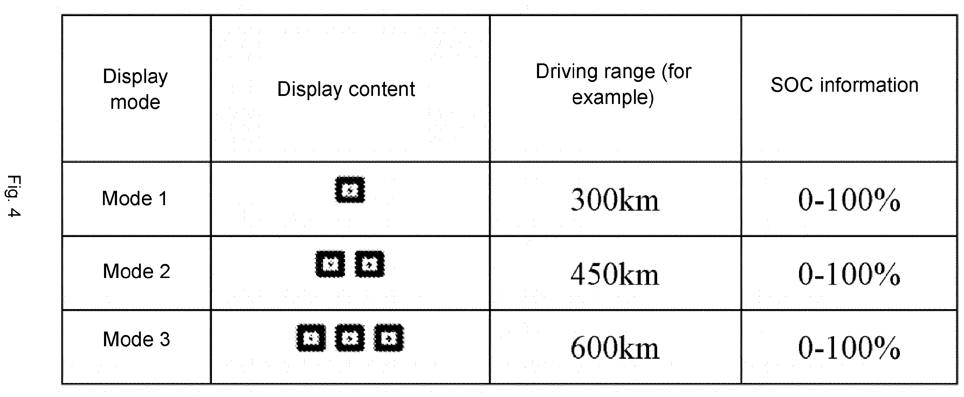

In this embodiment of the present application, the control apparatus 105 is also connected with the display apparatus 106. The control apparatus 105 can be connected with the display apparatus 106 in a wired or wireless manner, and performs information interaction with the display apparatus 106. In order to reduce the limitation of the layout space of devices, the control apparatus 105 can be connected with the display apparatus 106 by means of wireless communication such as Bluetooth or WIFI, so as to achieve an interaction between the communication interaction content of the control apparatus 105 and the display apparatus 106. The communication interaction content can include vehicle states, battery pack data, battery charging and replacement request data, etc. The display apparatus 106 can visually display the acquired communication interaction content. Fig. 4 is a schematic diagram of data visualization display based on an embodiment of the present application. Referring to Fig. 4, different states of the communication interaction content can be represented by the number of graphic icons; and each graphic icon can represent a fixed driving range of a driving range.

For example, on the basis of the above embodiments of the present application, the rechargeable battery pack and the battery-replacement battery pack respectively include a battery module, a fuse, a relay, a wireless battery management module, an internal high-voltage connection member, an internal low-voltage connection member, a standard plug-in unit, and a battery box body.

In this embodiment of the present application, the rechargeable battery pack and the battery-replacement battery pack can respectively consist of the battery module, the fuse, the relay, the wireless battery management module, the internal high-voltage connection member, the internal low-voltage connection member, the standard plug-in unit, and the battery box body. The number of the battery modules in the rechargeable battery pack and the battery-replacement battery pack can be the same or different.

For example, on the basis of the above embodiments of the present application, the switching apparatus includes a vehicle Power Distribution Unit (BDU) and a vehicle Main Battery Management Unit (MBMU). The switching apparatus is configured to identify the configuration of the rechargeable battery pack and the battery-replacement battery pack, collect battery signals of the rechargeable battery pack and the battery-replacement battery pack based on the configuration, and control voltage output or voltage input of the rechargeable battery pack and the battery-replacement battery pack on the basis of the battery signals.

For example, the switching apparatus can consist of the vehicle BDU and the vehicle MBMU, identifies the battery-replacement battery pack by means of the vehicle BDU and the vehicle MBMU, and determines the battery signals of the rechargeable battery pack and the battery-replacement battery pack, which are currently configured, in the vehicle. The battery signal can reflect the configuration number of batteries in the vehicle and the connection states of the batteries; and then the rechargeable battery pack and the battery-replacement battery pack can be controlled based on the configuration number of the batteries and the connection states of the batteries, so as to adjust the voltage output and voltage input of the rechargeable battery pack and the battery-replacement battery pack.

For example, on the basis of the above embodiments of the present application, the assembly apparatus includes a quick-change power battery frame, a standard connector, an on-board charger, a direct-current converter, and a direct-current quick-charging connection member. The battery-replacement battery pack is connected with the vehicle by means of the quick-change power battery frame, and is configured to provide power output for the vehicle or receive power input of the vehicle.

For example, the assembly apparatus in the battery system can include one or more of the quick-change power battery frame, the standard connector, the on-board charger, the direct-current converter, and the direct-current quick-charging connection member. The quick-change power battery frame can include a buckle or a slot, so as to conveniently mount or dismount the battery-replacement battery pack. The on-board charger provides the power input for the battery-replacement battery pack. The direct-current converter can convert input alternating current into an alternating current. The direct-current quick-charging connection member can include a plug or a caliper, and can be configured to connect the battery-replacement battery pack and a direct-current charging pile.

Exemplarily, the assembly apparatus in the battery system can include the quick-change power battery frame, the standard connector, the on-board charger &DC/DC, and a vehicle high-voltage load. The vehicle high-voltage load can include a motor controller, an air conditioning compressor, a water-heating Positive Temperature Coefficient (PTC), the direct-current quick-charging connection member, etc. The battery-replacement battery pack is connected with the quick-change power battery frame by means of the standard connector. By means of the power battery frame, two low-capacity standard battery-replacement battery packs can be completely interchangeable with a high-capacity standard battery-replacement battery pack on the vehicle. The assembly apparatus achieves high-voltage output/input of a battery charging and replacement integrated battery system with the on-board charger &DC/DC, the vehicle high-voltage load, and the direct-current quick-charging connection member.

For example, on the basis of the above embodiments of the present application, the quick-change power battery frame includes a connection wire and a connecting connector. The connection wire is configured to connect at least one battery-replacement battery pack to the quick-change power battery frame; and the connecting connector is configured to connect the quick-change power battery frame to the vehicle.

In this embodiment of the present application, the quick-change power battery frame can include the connection wire and the connecting connector. The connection wire can be a hard wire circuit, and can be configured to connect the plurality of battery-replacement battery packs and the vehicle, and provide voltage input or output for the vehicle. The connecting connector can include a clamping groove or a buckle, which is connected with the battery-replacement battery pack or the vehicle, such that convenient mounting or dismounting can be realized.

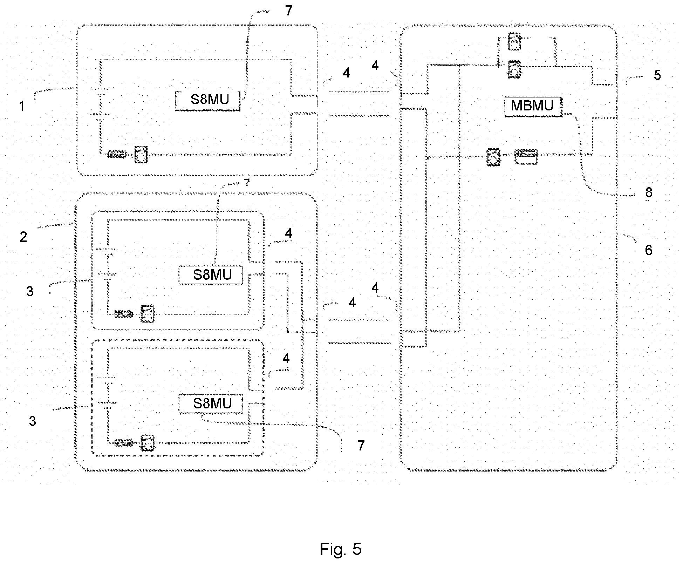

Exemplarily, Fig. 5 is a schematic structural diagram of a battery system based on another embodiment of the present application. Referring to Fig. 5, the battery system provided in this embodiment of the present application can consist of a vehicle rechargeable battery 1, a quick-change power battery frame 2, a standard quick-change power battery pack 3, a standard connector 4, a high-voltage connector 5, a vehicle BDU 6, a vehicle Slave Battery Management Unit (SBMU) 7, a battery-replacement battery pack SBMU 7, and a vehicle MBMU 8. The overall electrical main parameter, structural size, battery mechanical interface, and electrical interface of each standard quick-change power battery pack 3 are identical, such that the standard quick-change power battery pack is high in battery-replacement universality and easy to expand. The vehicle power battery pack 1 is connected with the vehicle BDU and the vehicle MBMU 6 by means of the standard connector 4. The quick-change power battery frame 2 is connected with the vehicle BDU and the vehicle MBMU 6 by means of the standard connector 4. The quick-change power battery pack 3 is connected with the quick-change power battery frame 2 by means of the standard connector 4. By means of the power battery frame 2, two low-capacity standard battery-replacement battery packs can be completely interchangeable with a high-capacity standard battery-replacement battery pack on the vehicle. In the present application, when a user selects the battery-replacement battery pack, there are still various selection solutions to meet the balance of driving range requirements and economic requirements. The battery-replacement battery can be expanded, for example, being compatible with 1 or 2 low-capacity standard battery-replacement battery packs, or 1 high-capacity standard battery-replacement battery pack by means of the quick-change power battery frame; and the high-capacity standard battery-replacement battery pack can completely occupy a battery-replacement battery pack layout area of the entire vehicle. The overall electrical main parameter, structural size, battery mechanical interface, and electrical interface of each low-capacity standard battery-replacement pack in a battery-replacement standard pack are identical, such that the battery-replacement standard pack is high in battery-replacement universality and easy to expand; and the electrical interfaces of the high-capacity standard battery-replacement pack and the low-capacity standard battery-replacement pack are identical. The vehicle battery pack SBMU 7, the battery-replacement battery pack SBMU 7, and the vehicle BDU are connected with the vehicle MBMU 8 in a wireless manner. Relevant information such as a battery pack operating state and a control instruction is transmitted by means of wireless signal transmission/receiving modules; and the MBMU 8 interacts the information with the vehicle controller by means of a CAN bus.

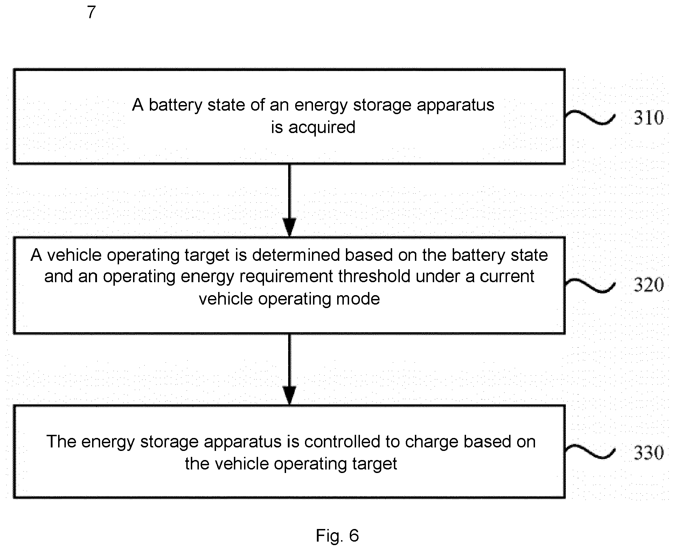

Fig. 6 is a flowchart of a charging control method based on another embodiment of the present application. This embodiment of the present application is applicable to vehicle battery charging control. The method can be executed by a charging control apparatus. The apparatus can be implemented by means of hardware and/or software. Referring to Fig. 6, the method provided in this embodiment of the present application includes the following steps.

At S310, a battery state of an energy storage apparatus is acquired. The battery state includes state of charge, internal resistance, and cell voltage.

The energy storage apparatus can be an apparatus that is configured to provide kinetic energy for the vehicle. The energy storage apparatus can consist of one or more battery packs. The energy storage apparatus can be the battery system described in any one of the above embodiments of the present application. The battery state can be information that reflects the current working state of the energy storage apparatus. The battery state can include one or more of state of charge, internal resistance, and cell voltage.

In this embodiment of the present application, the current working state of the energy storage apparatus can be monitored. A monitoring mode can include direct measurement by a sensor or parameter data calculation, for example, can collect the state of charge, internal resistance, and cell voltage of multiple battery packs in the energy storage apparatus.

At S320, a vehicle operating target is determined based on the battery state and an operating energy requirement threshold under a current vehicle operating mode.

The current vehicle operating mode can identify information of the traveling state of the vehicle. The current vehicle operating mode can be divided by an external environment where the vehicle is located, a vehicle internal state, and a vehicle control target, for example, can include a road condition traveling mode, a season traveling mode, an energy-saving traveling mode, etc. The operating energy requirement threshold can be a minimum energy value that drives the vehicle to travel. The operating energy requirement threshold can be determined by a planning route of the vehicle and energy consumption of the vehicle. The vehicle operating target can be a target for vehicle traveling, and can include arriving at a vehicle planning destination or arriving at a vehicle exchange station.

In this embodiment of the present application, determination can be performed based on the battery state and the operating energy requirement threshold under the current vehicle operating mode, so as to determine whether the vehicle meets requirements of the vehicle operating target. For example, if the operating energy requirement threshold is greater than the state of charge of the battery state, it is determined that the vehicle is unable to arrive at a planned destination, such that the vehicle operating target can be set to the nearest exchange station.

At S330, the energy storage apparatus is controlled to charge based on the vehicle operating target. The energy storage apparatus includes a rechargeable battery pack, a switching apparatus, and at least one battery-replacement battery pack; the rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

For example, the vehicle operating target can be determined, for example, arriving at the exchange station or arriving at the destination, such that the energy storage apparatus is charged based on different vehicle operating targets.

In this embodiment of the present application, by means of collecting the battery state of the energy storage apparatus, determining the vehicle operating target based on the battery state and the operating energy requirement threshold under the current vehicle operating mode, and controlling the charging of the energy storage apparatus based on the vehicle operating target, energy waste of the energy storage apparatus of the vehicle is mitigated, and the time for finding an exchange station and battery power consumption can be reduced.

For example, on the basis of the above embodiments of the present application, the energy requirement threshold under the current vehicle operating mode includes at least one of the following:
a vehicle driving range, a charging pile distance, an exchange station distance, or energy consumption of road conditions at a target position. The target position includes a charging pile position, an exchange station position, and a vehicle parking position. The current vehicle operating mode includes at least one of an urban short distance, a rural short distance, a high-speed short range, a mixed short distance, an urban long distance, a rural long distance, a high-speed long distance, or a mixed long distance.

For example, the energy requirement threshold can be one or more of the vehicle driving range, the charging pile distance, the exchange station distance, and the energy consumption of road conditions at the target position. Different vehicle operating modes can have different values. It is understandable that, the target position can be set to one or more of the charging pile position, the exchange station position, and the vehicle parking position. The current vehicle operating mode can be at least one of the urban short distance, the rural short distance, the high-speed short range, the mixed short distance, the urban long distance, the rural long distance, the high-speed long distance, or the mixed long distance.

Exemplarily, a preset energy threshold required by the vehicle operating mode can be a driving range, the charging pile distance, the exchange station distance, and the energy consumption of the road conditions to reach the target position. The target position includes the charging pile position, the exchange station position, and the vehicle parking position (the position that can be covered by the driving range). The vehicle operating mode includes the urban short distance, the rural short distance, the high-speed short range, and the mixed short distance (for example, ≤300 km, a driving range of a first energy storage apparatus); the urban long distance, the rural long distance, the high-speed long distance, and the mixed long distance (for example, ≤600 km, a driving range of the first energy storage apparatus and a second energy storage apparatus); and seasons such as winter, summer, spring, and autumn, or different temperatures. In addition, the vehicle operating mode is divided based on different vehicle traveling temperatures, such as highland and alpine areas, and low-dimensional high-temperature areas.

For example, on the basis of the above embodiments of the present application, the step of controlling the energy storage apparatus to charge based on the vehicle operating target includes: controlling the energy storage apparatus to perform vehicle direct-current charging; controlling the energy storage apparatus to perform vehicle alternating-current charging; controlling the rechargeable battery pack to perform vehicle direct-current charging; controlling the rechargeable battery pack to perform vehicle alternating-current charging; controlling the battery-replacement battery pack to perform vehicle direct-current charging; controlling the battery-replacement battery pack to perform vehicle alternating-current charging; and controlling the battery-replacement battery pack to perform exchange station direct-current charging.

In this embodiment of the present application, the charging of the energy storage apparatus can include charging the included rechargeable battery pack and battery-replacement battery pack, separately charging the rechargeable battery pack; and separately charging the battery-replacement battery pack. The charging mode can include direct-current charging and alternating-current charging. For example, the charging of the energy storage apparatus can further include performing exchange station direct-current charging on the battery-replacement battery pack. The direct-current charging can be to directly charge the battery-replacement battery pack, or perform re-charging after the battery-replacement battery pack is replaced from the vehicle.

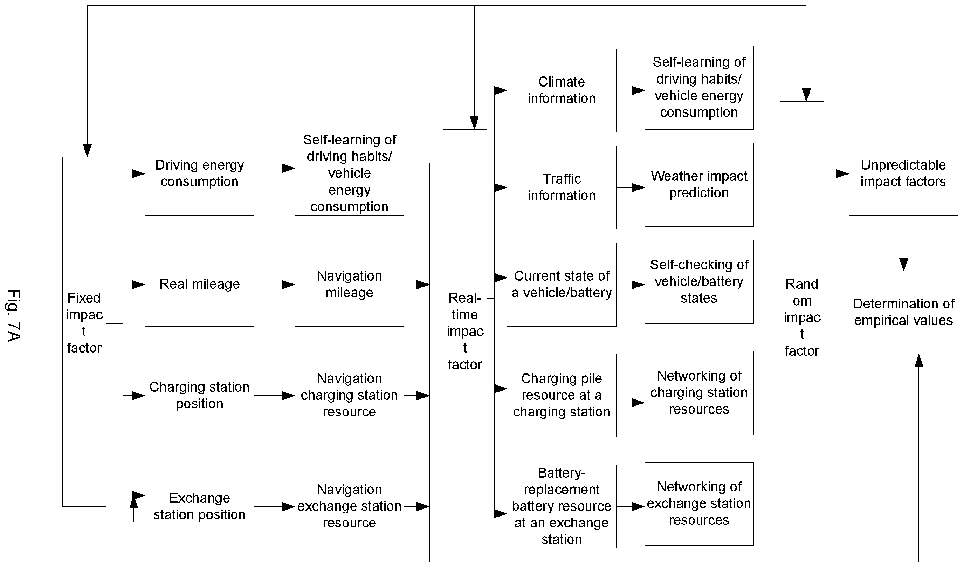

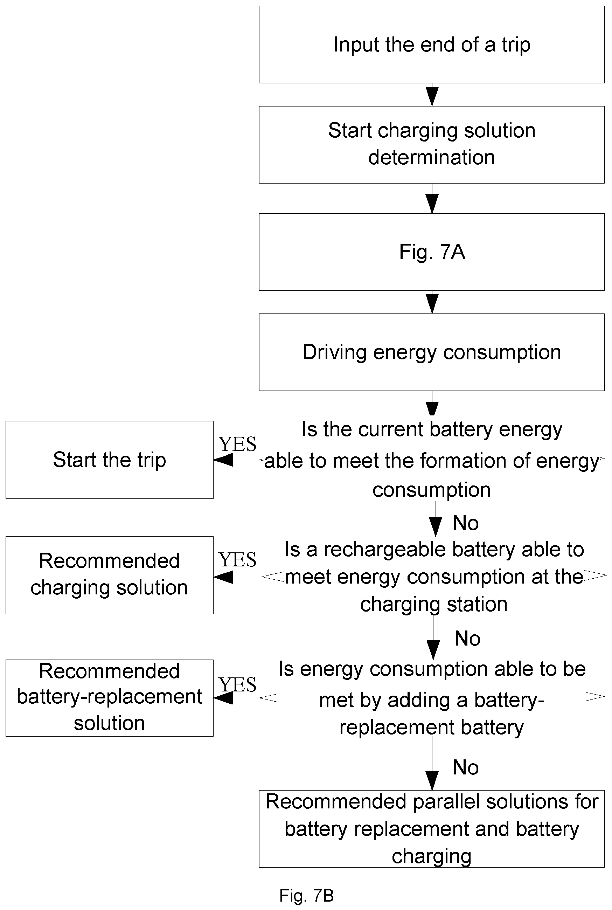

In an exemplary implementation, Fig. 7 is a schematic diagram of a charging control method based on another embodiment of the present application. Referring to Fig. 7, based on a charging target set by a user, the battery-replacement integrated battery system performs state calculation of an energy storage apparatus, so as to determine whether a preset energy threshold is met. A charging or battery-replacement solution is recommended. The method includes the following steps. At S1, a battery state of the energy storage apparatus is acquired. The battery state includes state of charge, internal resistance, and cell voltage. At S2, whether the energy storage apparatus reaches a preset energy threshold required by a vehicle operating mode is determined. The preset threshold includes a driving range, a charging pile distance, an exchange station distance, and energy consumption of road conditions to reach a target position. The target position includes a charging pile position, an exchange station position, and a vehicle parking position (the position that can be covered by the driving range). The vehicle operating mode includes a urban short distance, a rural short distance, a high-speed short range, and a mixed short distance (for example, ≤300 km, a driving range of a first energy storage apparatus); a urban long distance, a rural long distance, a high-speed long distance, and a mixed long distance (for example, ≤600 km, a driving range of the first energy storage apparatus and a second energy storage apparatus); and winter and summer, exhaustively listing all modes. At S3, the energy storage apparatus is controlled to charge. The charging of the energy storage apparatus includes vehicle direct-current charging and vehicle alternating-current charging of the first energy storage apparatus, and direct-current charging and vehicle alternating-current charging of the second energy storage apparatus. The direct-current charging of the second energy storage apparatus includes vehicle direct-current charging and direct-current charging in an exchange station.

For example, on the basis of the above embodiments of the present application, the step of controlling the battery-replacement battery pack to perform exchange station direct-current charging includes: determining the size and number of target battery-replacement battery packs based on a battery-replacement requirement of a user; and controlling the target battery-replacement battery pack to replace the battery-replacement battery pack at an exchange station based on the size and number.

The battery-replacement requirement can be a control instruction that is used for triggering battery replacement and is generated by the user. The battery-replacement requirement can be determined based on the cost or traveling requirement set by the user. Different battery-replacement requirements can correspond to the size and number of the battery-replacement battery packs with different sizes. The size can reflect an energy storage space of the battery-replacement battery pack; and the number can reflect the use number of the battery-replacement batteries.

For example, the battery-replacement requirement can be generated based on the control instruction preset by the user or a real-time control instruction, and then the size and number of the battery-replacement battery packs are selected based on the battery-replacement requirement, such that the battery-replacement battery packs with the corresponding size and number can be selected based on the number, and the battery-replacement battery packs that have been mounted in the vehicle are replaced with the selected battery-replacement battery packs. It is understandable that, the size and number of the battery-replacement batteries replaced in the vehicle during battery-replacement can be different from the size and number of selected target battery-replacement battery packs. For example, a large-size standard battery-replacement battery pack 2 originally mounted in the vehicle can be replaced by using two small-size standard battery-replacement battery packs 1.

For example, on the basis of the above embodiments of the present application, when the energy storage apparatus is controlled to charge based on the vehicle operating target, the method further includes: detecting configuration parameters of the energy storage apparatus; and displaying, based on the configuration parameters, the respective number, driving range, and residual electric charge quantity of the battery-replacement battery pack and the rechargeable battery pack in the energy storage apparatus.

The configuration parameters can be state parameters of the battery packs currently configured in the vehicle. The state parameters can include data of the battery packs, such as the residual electric charge quantity and the driving range.

In this embodiment of the present application, when the energy storage apparatus is controlled to charge, parameters of the respective number, driving range, and residual electric charge quantity of the battery-replacement battery pack and the rechargeable battery pack in the energy storage apparatus can also be detected, and the collected parameters are displayed in real time, so as to improve the safety of battery replacement.

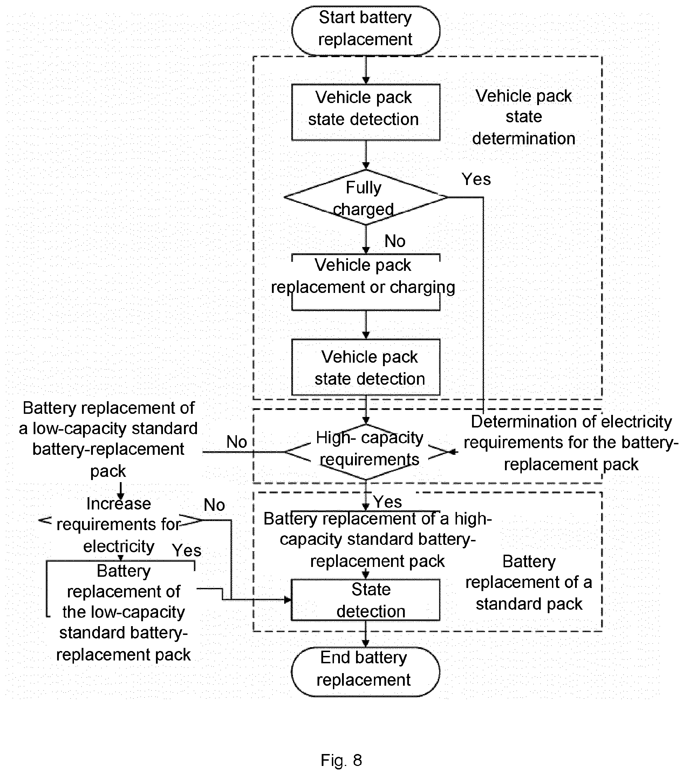

In an exemplary implementation, Fig. 8 is a schematic diagram of battery replacement of a battery-replacement battery pack based on another embodiment of the present application. Referring to Fig. 8, a battery-replacement process of the battery-replacement battery pack can include three main steps of vehicle pack state determination, determination of power requirements for battery-replacement batteries, and battery replacement of standard packs. A user can freely select to mount a high-capacity standard battery-replacement battery pack based on a driving range and a cost target requirement, or can select at least two low-capacity standard battery-replacement battery packs. The extendibility of battery-replacement batteries is realized through the high-capacity standard battery-replacement battery pack and the low-capacity standard battery-replacement battery pack. The battery-replacement process can perform battery-replacement selection based on system prompt, and can monitor the battery charging and replacement states of the battery packs and the safety state of the battery system in real time. For example, the display apparatus can also display different modes based on actual configuration of the battery packs; and the number of the battery packs, the driving range, and SOC information can be all displayed under each mode. The display apparatus can be an intelligent vehicle instrument.

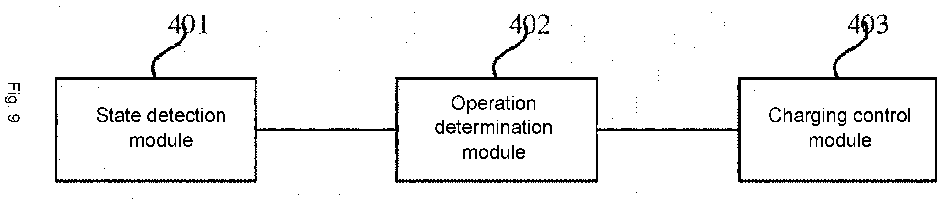

Fig. 9 is a schematic structural diagram of a charging control apparatus based on an embodiment of the present application. The apparatus can execute the charging control method provided in any of the embodiments of the present application, and has corresponding functional modules for executing the method and corresponding beneficial effects. The apparatus is implemented by means of software and/or hardware, and includes a state detection module 401, an operation determination module 402, and a charging control module 403.

The state detection module 401 is configured to acquire a battery state of an energy storage apparatus. The battery state includes state of charge, internal resistance, and cell voltage.

The operation determination module 402 is configured to determine a vehicle operating target based on the battery state and an operating energy requirement threshold under a current vehicle operating mode.

The charging control module 403 is configured to control the energy storage apparatus to charge based on the vehicle operating target. The energy storage apparatus includes a rechargeable battery pack, a switching apparatus, and at least one battery-replacement battery pack; the rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

In this embodiment of the present application, the state detection module collects the battery state of the energy storage apparatus, the operation determination module determines the vehicle operating target based on the battery state and the operating energy requirement threshold under the current vehicle operating mode, and the charging control module controls the charging of the energy storage apparatus based on the vehicle operating target, such that energy waste of the energy storage apparatus of the vehicle is mitigated, and the time for finding an exchange station and battery power consumption can be reduced.

For example, on the basis of the above embodiments of the present application, the energy requirement threshold under the current vehicle operating mode in the apparatus includes at least one of the following:
a vehicle driving range, a charging pile distance, an exchange station distance, or energy consumption of road conditions at a target position. The target position includes a charging pile position, an exchange station position, and a vehicle parking position. The current vehicle operating mode includes at least one of an urban short distance, a rural short distance, a high-speed short range, a mixed short distance, an urban long distance, a rural long distance, a high-speed long distance, or a mixed long distance.

For example, on the basis of the above embodiments of the present application, the charging control module 403 is configured to control the energy storage apparatus to perform vehicle direct-current charging;
control the energy storage apparatus to perform vehicle alternating-current charging; control the rechargeable battery pack to perform vehicle direct-current charging; control the rechargeable battery pack to perform vehicle alternating-current charging; control the battery-replacement battery pack to perform vehicle direct-current charging; control the battery-replacement battery pack to perform vehicle alternating-current charging; and control the battery-replacement battery pack to perform exchange station direct-current charging.

For example, on the basis of the above embodiments of the present application, the charging control module 403 includes a requirement selection unit and a battery-replacement control unit.

The requirement selection unit is configured to determine the size and number of target battery-replacement battery packs based on a battery-replacement requirement of a user.

The battery-replacement control unit is configured to control the target battery-replacement battery pack to replace the battery-replacement battery pack at an exchange station based on the size and number.

For example, on the basis of the above embodiments of the present application, the apparatus further includes a parameter display module.

The parameter display module is configured to detect configuration parameters of the energy storage apparatus; and display, based on the configuration parameters, the respective number, the driving range, and residual electric charge quantity of the battery-replacement battery pack and the rechargeable battery pack in the energy storage apparatus.

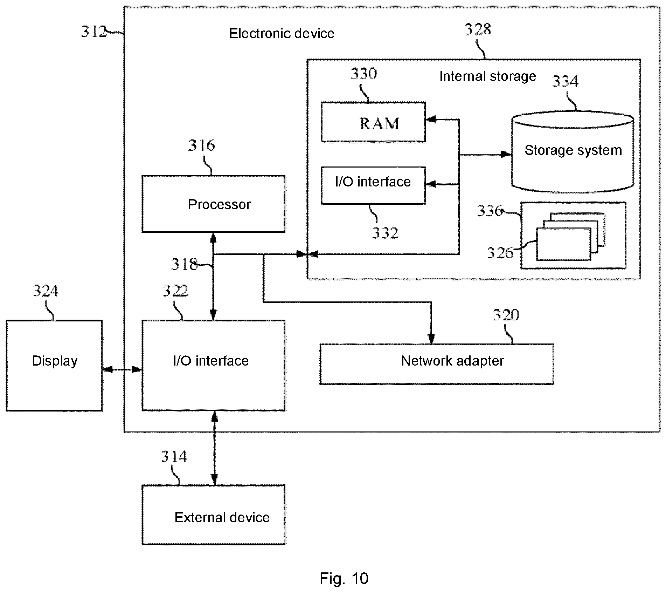

Fig. 10 is a schematic structural diagram of an electronic device based on an embodiment of the present application. Fig. 10 shows a block diagram of a computer device 312 applied to implement the implementations of the present application. The computer device 312 shown in Fig. 10 is only an example, and should not impose any limitations on the functionality and scope of use of embodiments of the present application. The device 312 is typically a computing device for implementing an access control method.

As shown in Fig. 5, the computer device 312 is expressed in the form of a general computing device. Components of the computer device 312 can include one or more processors 316, a storage apparatus 328, and a bus 318, which is connected with different system components (including the storage apparatus 328 and the processors 316).

The bus 318 indicates one or more of several types of bus structures, and includes a memory bus or a memory controller, a peripheral bus, an accelerated graphics port, a processor, or a local bus using any of multiple bus structures. For example, these system structures include, but are not limited to, an Industry Standard Architecture (ISA) bus, a Micro Channel Architecture (MCA) bus, an enhanced ISA bus, a Video Electronics Standards Association (VESA) local bus, and a Peripheral Component Interconnect (PCI) bus.

The computer device 312 typically includes various computer system readable media. These media can be any available media that are able to be accessed by the computer device 312, including volatile media and non-volatile media, and removable media and non-removable media.

The storage apparatus 328 can include a computer system readable medium in the form of a volatile memory, such as a Random Access Memory (RAM) 330 and/or a cache memory 332. The computer device 312 can include other removable/non-removable and volatile/non-volatile computer system storage media. For example only, a storage system 334 can be configured to read non-removable and non-volatile magnetic media (which are not shown in Fig. 10, and are generally called "hard disk drives"). Although the storage system is not shown in Fig. 10, the storage system can provide a disk drive for reading a removable non-volatile magnetic disk (such as a "floppy disk"), and an optical disk drive, which is configured to read a removable non-volatile optical disk (such as a Compact Disc-Read Only Memory (CD-ROM)) and a Digital Video Disc-Read Only Memory (DVD-ROM). In these cases, each drive can be connected with the bus 318 via one or more data medium interfaces. The storage apparatus 328 can include at least one program product. The program product is provided with a set of (for example, at least one) program modules; and these program modules are configured to execute functions of the embodiments of the present application.

A program 336 having a set of (for example, at least one) program modules 326 can be stored in the storage apparatus 328, for example. Such program modules 326 include, but are not limited to, an operating system, one or more application programs, other program modules, and program data. Each of these examples, or a combination thereof, can include an implementation of a network environment. The program modules 326 generally executes functions and/or methods described in the embodiments of the present application.

The computer device 312 can also communicate with one or more external devices 314 (such as a keyboard, a pointing device, a camera, and a display 324), and can further communicate with one or more devices, which enable a user to interact with the computer device 312, and/or communicate with any device (such as a network card and a modem), which enables the computer device 312 to communicate with one or more other computing devices. Such communication canbe performed by means of an Input/Output (I/O) interface 322. In addition, the computer device 312 can further communicate with one or more networks (such as a Local Area Network (LAN), a Wide Area Network (WAN) and/or a public network, for example, Internet) by means of a network adapter 320. As shown in the figure, the network adapter 320 communicates with other modules of the computer device 312 by means of the bus 318. It is to be understood that, although not shown in the figure, other hardware and/or software modules can be used in combination with the computer device 312, including, but not limited to: microcode, device drives, redundant processing units, external disk drive arrays, Redundant Arrays of Independent Disks (RAID) systems, tape drives, and data backup storage systems, etc.

The processor 316 executes various function applications and data processing by running the program stored in the storage apparatus 328, for example, implementing the charging control method provided in the embodiments of the present application.

An embodiment of the present application provides a computer-readable storage medium. The computer-readable storage medium stores a computer program. The charging control method described in the embodiments of the present application is implemented when the computer program is executed by a processing apparatus. The computer-readable medium of the present application can be a computer-readable signal medium or a computer-readable storage medium or any combination thereof. The computer-readable storage medium, for example, can be, but not limited to, an electrical, magnetic, optical, electromagnetic, infrared, or semiconductor system, apparatus or device, or a combination of any of the above. More specific examples of the computer-readable storage medium can include, but are not limited to, an electrical connection member including one or more wires, a portable computer disk, a hard disk, an RAM, an ROM, an Erasable Programmable Read-Only Memory (EPROM), a flash memory, optical fiber, a portable Compact Disc Read-Only Memory (CD-ROM), an optical storage device, a magnetic storage device, or any appropriate combination thereof. In the present disclosure, the computer-readable storage medium can be any tangible medium that includes or stores a program. The program can be used by or in combination with an instruction execution system, an apparatus, or a device. In the present disclosure, the computer-readable signal medium can include a data signal that is propagated in a base band or propagated as a part of a carrier wave, which carries a computer-readable program code therein. The propagated data signal can adopt multiple forms including, but not limited to, an electromagnetic signal, an optical signal, or any suitable combination of the above. The computer-readable signal medium can also be any computer-readable medium other than the computer-readable storage medium. The computer-readable signal medium can send, propagate or transmit the program that is used by or in combination with the instruction execution system, the apparatus, or the device. The program code in the computer-readable medium can be transmitted with any proper medium, including, but not limited to, a wire, an optical cable, Radio Frequency (RF), etc., or any proper combination thereof.

In some implementations, a client or a server can communicate by using any currently known or future developed network protocol such as Hyper Text Transfer Protocol (HTTP) and can be interconnected with digital data communications (for example, communication networks) in any form or medium. Examples of a communication network include an LAN, a WAN, an inter-network (for example, the Internet), and an end-to-end network (for example, an ad hoc end-to-end network), as well as any currently known or future developed networks.

The computer-readable medium can be included in the computer device, or can also be present separately and not fitted into the computer device.

The computer-readable medium carries one or more programs. When the one or more programs are executed by the computer device, the computer device is enabled to perform the following operations: acquiring a battery state of an energy storage apparatus, where the battery state includes state of charge, internal resistance, and cell voltage; determining a vehicle operating target based on the battery state and an operating energy requirement threshold under a current vehicle operating mode; and controlling the energy storage apparatus to charge based on the vehicle operating target. The energy storage apparatus includes a rechargeable battery pack, a switching apparatus, and at least one battery-replacement battery pack; the rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus. The computer-readable storage medium can be a non-transitory computer-readable storage medium.

The computer program code configured to execute operations in the present disclosure can be compiled by using one or more programming languages or a combination thereof. The programming languages include a programming language facing an object, such as Java, Smalltalk, and C++, and further include a conventional procedural programming language, such as "C" language, or similar programming languages. The program code can be completely executed in a computer of a user or partially executed in the computer of the user, executed as an independent software package, executed partially in the computer of the user and partially in a remote computer, or executed completely in the remote server or a server. Under the condition that the remote computer is involved, the remote computer can be concatenated to the computer of the user through any type of network including an LAN or a WAN, or can be concatenated to an external computer (for example, concatenated by an Internet service provider through the Internet).

The flowcharts and block diagrams in the drawings illustrate probably implemented system architectures, functions, and operations of the system, method, and computer program product based on various embodiments of the present disclosure. On this aspect, each block in the flowcharts or block diagrams can represent a module, a program segment, or a portion of a code, which includes one or more executable instructions for implementing the specified logic functions. It is also to be noted that, in certain alternative implementations, the functions marked in the blocks can also be realized in a sequence different from those marked in the drawings. For example, two blocks shown in succession can, in fact, be executed substantially in parallel, and sometimes in a reverse sequence, depending upon the functionality involved. It is further to be noted that, each block in the block diagrams and/or the flowcharts and a combination of the blocks in the block diagrams and/or the flowcharts can be implemented by a dedicated hardware-based system configured to execute a specified function or operation, or can be implemented by a combination of special hardware and a computer instruction.

The units described in the embodiments of the present disclosure can be implemented by means of software or hardware. The name of the unit does not in some cases constitute a limitation of the unit itself.

The functions described above herein can be executed, at least in part, by one or more hardware logic components. For example, without limitation, exemplary types of hardware logic components that can be used include: a Field Programmable Gate Array (FPGA), an Application-Specific Integrated Circuit (ASIC), an Application-Specific Standard Product (ASSP), systems-on-chip (SOC), a Complex Programmable Logic Device (CPLD), and the like.

In the context of the disclosure, a machine-readable medium can be a tangible medium, which can include or store a program for being used by an instruction execution system, device, or apparatus or in combination with the instruction execution system, apparatus, or device. The machine-readable medium can be a machine-readable signal medium or a machine-readable storage medium. The machine-readable medium can include, but is not limited to, an electronic, magnetic, optical, electromagnetic, infrared, or semiconductor system, device, or apparatus, or any foregoing suitable combinations. More specific examples of the machine-readable storage medium can include electrical connections based on one or more wires, a portable computer disk, a hard disk, an RAM, an ROM, an Erasable Programmable Read-Only Memory (EPROM or flash memory), an optical fiber, a portable Compact Disk Read-Only Memory (CD-ROM), an optical storage device, a magnetic storage device, or any above suitable combinations.

The battery system provided in the embodiments of the present application includes the rechargeable battery pack, the switching apparatus, and the plurality of battery-replacement battery packs. The switching apparatus is connected with the battery-replacement battery packs, and is configured to control the rechargeable battery pack and the battery-replacement battery packs to provide stable power for the vehicle. The rechargeable battery pack is fixedly connected with the vehicle. The battery-replacement battery packs are mounted in the vehicle by using the assembly apparatus. By using the switching apparatus to provide the stable power for the vehicle, the impact on the stability of voltage during replacement of the battery-replacement battery pack is reduced, such that rational configuration of the rechargeable battery pack and the battery-replacement battery packs is realized, thereby improving the driving range of the battery system.

## Claims

1. A battery system, comprising:
a rechargeable battery pack, a switching apparatus, and at least one battery-replacement battery pack, wherein
the rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

2. The battery system as claimed in claim 1, further comprising a control apparatus and a display apparatus, wherein
the control apparatus is connected with the rechargeable battery pack and the battery-replacement battery pack, and is configured to monitor battery parameter information of the battery-replacement battery pack and insulation information of the vehicle during battery replacement; the control apparatus is further configured to execute a battery replacement fault handling operation based on the battery parameter information and the insulation information; and
the display apparatus is connected with the control apparatus, and is configured to acquire communication interaction content of the control apparatus, and display the communication interaction content.

3. The battery system as claimed in claim 1, wherein the rechargeable battery pack and the battery-replacement battery pack respectively comprise a battery module, a fuse, a relay, a wireless battery management module, an internal high-voltage connection member, an internal low-voltage connection member, a standard plug-in unit, and a battery box body.

4. The battery system as claimed in claim 1, wherein the switching apparatus comprises a vehicle Power Distribution Unit (BDU) and a vehicle Main Battery Management Unit (MBMU); the switching apparatus is configured to identify the configuration of the rechargeable battery pack and the battery-replacement battery pack, collect battery signals of the rechargeable battery pack and the battery-replacement battery pack based on the configuration, and control voltage output or voltage input of the rechargeable battery pack and the battery-replacement battery pack on the basis of the battery signals.

5. The battery system as claimed in claim 1, wherein the assembly apparatus comprises a quick-change power battery frame, a standard connector, an on-board charger, a direct-current converter, and a direct-current quick-charging connection member; and
the battery-replacement battery pack is connected with the vehicle through the quick-change power battery frame, and is configured to provide power output for the vehicle or receive power input of the vehicle.

6. The battery system as claimed in claim 5, wherein the quick-change power battery frame comprises a connection wire and a connecting connector; the connection wire is configured to connect at least one battery-replacement battery pack to the quick-change power battery frame; and the connecting connector is configured to connect the quick-change power battery frame to the vehicle.

7. A charging control method, comprising:
acquiring a battery state of an energy storage apparatus, wherein the battery state comprises state of charge, internal resistance, and cell voltage;
determining a vehicle operating target based on the battery state and an operating energy requirement threshold under a current vehicle operating mode; and
controlling the energy storage apparatus to charge based on the vehicle operating target, wherein
the energy storage apparatus comprises a rechargeable battery pack, a switching apparatus, and at least one battery-replacement battery pack; the rechargeable battery pack and the battery-replacement battery pack are connected with the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

8. The method as claimed in claim 7, wherein the energy requirement threshold under the current vehicle operating mode comprises at least one of the following:
a vehicle driving range, a charging pile distance, an exchange station distance, or energy consumption of road conditions at a target position, wherein the target position comprises a charging pile position, an exchange station position, and a vehicle parking position; and the current vehicle operating mode comprises: an urban short distance, a rural short distance, a high-speed short range, a mixed short distance, an urban long distance, a rural long distance, a high-speed long distance, and a mixed long distance.

9. The method as claimed in claim 7, wherein controlling the energy storage apparatus to charge based on the vehicle operating target comprises at least one of the followings:
controlling the energy storage apparatus to perform vehicle direct-current charging;
controlling the energy storage apparatus to perform vehicle alternating-current charging;
controlling the rechargeable battery pack to perform vehicle direct-current charging;
controlling the rechargeable battery pack to perform vehicle alternating-current charging;
controlling the battery-replacement battery pack to perform vehicle direct-current charging;
controlling the battery-replacement battery pack to perform vehicle alternating-current charging; and
controlling the battery-replacement battery pack to perform exchange station direct-current charging.

10. The method as claimed in claim 9, wherein controlling the battery-replacement battery pack to perform exchange station direct-current charging comprises:
determining the size and number of target battery-replacement battery packs based on a battery-replacement requirement of a user; and
controlling the target battery-replacement battery pack to replace the battery-replacement battery pack at an exchange station based on the size and number.

11. The method as claimed in claim 10, wherein, when controlling the energy storage apparatus to charge based on the vehicle operating target, the method further comprises:
detecting configuration parameters of the energy storage apparatus; and
displaying, based on the configuration parameters, the respective number, the driving range, and residual electric charge quantity of the battery-replacement battery pack and the rechargeable battery pack in the energy storage apparatus.

12. A charging control apparatus, comprising:
a state detection module, configured to acquire a battery state of an energy storage apparatus, wherein the battery state comprises state of charge, internal resistance, and cell voltage;
an operation determination module, configured to determine a vehicle operating target based on the battery state and an operating energy requirement threshold under a current vehicle operating mode; and
a charging control module, configured to control the energy storage apparatus to charge based on the vehicle operating target, wherein
the energy storage apparatus comprises a rechargeable battery pack, a switching apparatus, and at least one battery-replacement battery pack; the rechargeable battery pack and the battery-replacement battery pack are connected to the switching apparatus; the switching apparatus is configured to control the rechargeable battery pack and the battery-replacement battery pack to provide a stable voltage for a vehicle load; the rechargeable battery pack is fixed on a vehicle; and the battery-replacement battery pack is mounted on the vehicle through an assembly apparatus.

13. An electronic device, comprising:
one or more processors; and
a memory, configured to store one or more programs, wherein
when the one or more programs are executed by the one or more processors, the one or more processors are enabled to implement the charging control method as claimed in any one of claims 7 to 11.

14. A computer-readable storage medium, having a computer program stored thereon, wherein the charging control method as claimed in any one of claims 7 to 11 is implemented when the computer program is executed by a processor.
